# EUROPEAN PATENT SPECIFICATION

(11) **EP 1 701 826 B1**
(45) Date of publication and mention of the grant of the patent: **02.06.2010**
(21) Application number: 03782442.2
(22) Date of filing: 12.12.2003
(51) Int. Cl.: B26B 21/40, B26B 21/14, B29C 45/14

(54) **IMPROVED PROCESS FOR MAKING OF A WET SHAVING SYSTEM WITH GUARD BAR**
VERBESSERTES VERFAHREN ZUR HERSTELLUNG EINES NASSRASIERSYSTEMS MIT SCHUTZLEISTE
PROCEDE AMELIORE DE FABRICATION D'UN SYSTEME DE RASAGE HUMIDE MUNI D'UNE BARRE DE PROTECTION

(43) Date of publication of application: 20.09.2006
(73) Proprietor: BIC Violex S.A., 145 69 Anixi, Attiki (GR)
(72) Inventor: GRATSIAS, Spiros, Athens, GR-113 63 Attiki, (GR); BOZIKIS, Ioannis, Koukaki-Athens, GR-117 41 (GR); EFTHIMIADIS, Dimitris, Athens, GR-114 76 Attiki, (GR)
(74) Representative: Boulinguiez, Didier
(86) International application number: PCT/EP2003/014471
(87) International publication number: WO 2005/058558

(56) References cited:
- FR-A- 2 805 197
- US-A- 4 335 508
- US-A- 4 502 217
- US-A- 5 067 238
- US-A- 5 333 382
- US-A1- 2003 208 907

## Description

### Field of the invention

This invention relates to an improved process for the making of a wet shaving system with a guard bar and the obtained wet shaving system.

### Background of the invention

As is known to the person skilled in the art, a wet shaving system generally comprises at least one razor blade positioned in a platform usually made of rigid plastic, possibly a cover behind the blade, and a guard bar in front of the blade and parallel to the blade cutting edge.

Over time, various embodiments have been developed, such as a system comprising several blades, for example two or three blades; a system comprising a lubricating strip on the cover; a system comprising a guard bar provided with longitudinal skin-engaging protrusions; a system comprising a guard bar which is of elastomeric material; a system comprising a guard bar including a water-leachable material. The platform itself may be made of a unitary body, or may be made of several parts.

Usually, the guard bar is of a rigid plastic material. In some embodiments, it comprises a skin-contacting portion of elastomeric material.

The guard bar is designed to be the first point of contact with the skin when the shaving system is used, and its material, shape, and position relative to the blade or first blade are important in the comfort of the resulting shaving. In particular, it exerts a degree of drag or friction on the skin depending on the material and shape of the skin-contacting portion of the guard bar (rigid fins, elastomeric fins, protuberances and/or recessed portions of various shapes). This stretches the skin, thus helping preventing the skin from being pinched between the guard bar and the blade or first blade. The comfort of the shave also depends on the material used for the guard bar, because of the contact with the skin.

A guard bar in metal can be found agreeable by some users, because of the cool feeling felt when shaving.

US Patent N°2,349,252 discloses a shaving system having a guard consisting of a corrugated length of wire having two extended parallel ends, which are slipped in under resilient fingers present on the platform.

US Patent N°4,502,217 discloses a shaving instrument comprising a metal guard bar provided with teeth, and positioned by press-fitting in the platform or base portion. The metal guard bar comprises a longitudinal bar and two short end legs which form an angle with the bar, and is thus in the form of a U, as can be seen on figure 9 (numeral reference 6). It is press-fitted on the base portion. However, such an embodiment presents some drawbacks: it is difficult to have constant geometry for every assembly, there are very low tolerances in order to have safe press-fit, it is difficult to cut and form the wire metal bar to a U shape with respect to such low tolerances, and the range of diameter of the guard bar is small (1.2 to 2.2 mm). The issue of the low tolerances is pointed out in the patent, where it is said that in order for the platform lugs to not be deformed by excessive press fix when the legs are inserted into the platform, the legs of the guard bar must fit smoothly without play into the recesses provided in the platform for their reception. Such a process is thus not satisfactory.

There remains the need for a process to manufacture a wet shaving system such that the geometry of the guard bar and the tolerance criteria are no longer an issue when attaching the guard bar to the platform, so that the process for manufacturing the shaving system is easier to implement.

### Summary of the invention

It is an object of the invention to provide a process for the manufacture of a wet shaving system comprising at least one blade, a platform and a guard bar having two ends and positioned forward of the at least one blade and parallel to the blade cutting edge, said process comprising the steps of :
- providing a guard bar (2) having two ends,
- positioning said guard bar in a mold cavity for said platform,
- molding at least part of the platform by injecting plastic in the mold cavity,
wherein said at least part of the platform is molded over said ends of said guard bar.

The guard bar is thus fixedly attached to the platform.

The guard bar may be made of any appropriate material, in particular metal and wood.

It is a further object of the invention to provide a wet shaving system obtained by the process of the invention.

It is a further object of the invention to provide a wet shaving system comprising at least one blade, a platform and a guard bar having two ends and positioned forward of the at least one blade and parallel to the blade cutting edge, said platform having parts molded over said ends of said guard bar.

### Detailed description of the invention

The above and other objects and advantages of the invention will become apparent from the detailed description of the invention, considered in conjunction with the accompanying drawings.

As mentioned, the guard bar of a shaving system of the invention is fixedly attached by its ends to the platform by molding part of the platform over said ends of said guard bar.

More specifically, during the process of molding the plastic platform, and while the mould is still open, a guard bar having two ends is inserted inside one of the mould parts at the appropriate location, the two ends of the bar being uncovered and exposed to plastic. Then the mould closes, and plastic is injected in it. The ends of the guard bar are then covered with the plastic forming the platform or part of the platform and thus fixedly attached to the platform of the shaving system. When the platform is made of several parts, there may be several successive injections of plastic, possibly of different types, in order to finalize the formation of the platform.

In the process for the making of the shaving system, there may then be steps of injecting materials in order to form the cover and possibly the lubricating strip, if present, as known to the person skilled in the art.

The guard may be of any material, shape and/or dimensions, as long as its two ends can be attached to the platform, i.e. as long as the distance between the two ends is not longer than the width of the platform. The invention allows to being free from the strict tolerance criteria linked with the press fitting process of attaching a guard bar, and permits the use of a guard bar in all kinds of materials, profiles and diameters, for more comfortable and safer shaving performance. In particular, it permits the choice of a material which has a cold feeling, such as metal, and which is generally agreeable to the user, such as metal and wood. It further permits the precise placement and controllability of the overall shaver geometry. Furthermore, it allows for the placement of a guard bar exhibiting a variety of shapes and diameters without affecting assembly process methods and equipment.

It is no longer necessary to have a U-shaped guard bar, nor is it necessary to comply with strict geometry/dimension requirements, to correspond to recesses in the platform, since the tolerance is no longer an issue.

According to the invention, the guard bar may thus have a circular or substantially circular cross-section. It may exhibit a wide range of diameters, for example from about 1 to about 4 mm. It may also exhibit other complex geometrical shapes, such as an oval cross-section or an irregular cross-section. In a preferred embodiment, the guard bar has a circular or substantially circular cross-section.

Additionally, according to the invention, the guard bar may be smooth, polished or rough. It may comprise protuberances, such as longitudinal fins, or grooves and mounds, or irregularly or regularly scattered teeth, such as described in US Patents N°4,502,217 and 4,998,347 incorporated herewith by reference.

Still according to the invention, the guard may be a longitudinal body; it may also be a longitudinal body provided with two ends extending substantially perpendicularly to the axis of the body.

The guard bar may be made of metal, for instance stainless steel, steel, aluminum, copper, nickel, metallic alloys, preferably stainless steel.

The guard member may be made of wood, for instance any wood which is substantially rot-resistant or rot-proof and water-resistant or water-proof, either naturally or after treatment, so as to withstand the repeated contacts with water implied by the use in shaving. Examples are teakwood, salwood, hollak, beech wood, mahogany, cedar, preferably teak. The wood used for the guard bar may be cut or extruded into a specific shape.

In a preferred embodiment of the invention, the guard bar is made of metal, and is in the shape of a longitudinal body with a circular or substantially circular cross-section.

Obviously, a shaving system according to the invention, or made according to the process of the invention, may comprise several blades, such as two, three or four blades, and it may comprise other elements known to the person skilled in the art such as a cover and/or a lubricating strip. It may be attached movingly or fixedly to a handle, as known to the person skilled in the art.

### Brief description of the drawings

Figure 1 is a perspective view of an embodiment of a shaving system according to the invention (blade not represented).
Figure 2 is a cross-sectional view of the shaving system of Figure 1.
Figure 3 is an enlargement of a portion of Figure 2.
Figure 4 is a perspective view of an embodiment of a shaving system according to the invention.

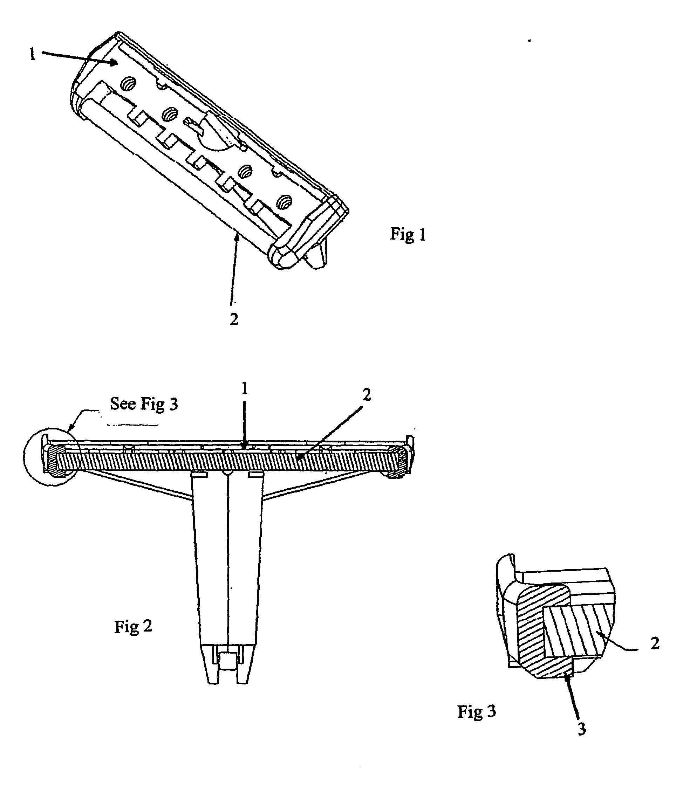

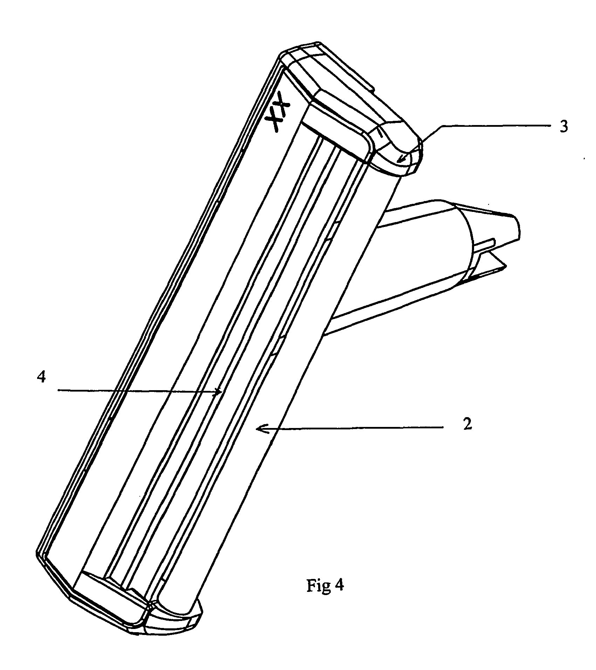

The shaving system of Figures 1-4 comprises a platform 1, at least one blade 4 and a smooth guard bar 2. One can see in Figure 3 the plastic platform parts 3 which cover the ends of the guard bar 2, thus fixedly attaching the guard bar to the platform.

The invention is applicable to various forms of shaving systems, and is not limited to the embodiments described herein and illustrated in the drawings.

## Claims

1. A process for the manufacture of a wet shaving system comprising at least one blade (4), a platform (1) and a guard bar (2) having two ends and positioned forward of the at least one blade and parallel to the blade cutting edge, said process comprising the steps of:
- providing a guard bar (2) having two ends,
- positioning said guard bar in a mold cavity for said platform,
- molding at least part of the platform by injecting plastic in the mold cavity,
wherein said at least part of the platform (3) is molded over said ends of said guard bar.

2. The process of claim 1, wherein the guard bar is made of a material selected from the group consisting of metal and wood.

3. The process of claim 2, wherein the metal is selected from the group consisting of steel, stainless steel, aluminum, copper, nickel, metallic alloys.

4. The process of claim 3, wherein the metal is stainless steel.

5. The process of claim 2, wherein the wood is selected from substantially rot-resistant wood, rot-proof wood, water-resistant wood, water-proof wood, teakwood, salwood, hollak, beech wood, mahogany, cedar.

6. The process of claim 1, wherein the guard bar is in the shape of a longitudinal body with a substantially circular cross-section.

7. A wet shaving system comprising at least one blade (4), a platform (1) and a guard bar (2) having two ends and positioned forward of the at least one blade and parallel to the blade cutting edge, **characterized in that** said platform has parts (3) molded over said ends of said guard bar.

8. The wet shaving system of claim 7, wherein the guard bar is made of a material selected from the group consisting of metal and wood.

9. The wet shaving system of claim 8, wherein the metal is selected from the group consisting of steel, stainless steel, aluminum, copper, nickel, metallic alloys.

10. The wet shaving system of claim 9, wherein the metal is stainless steel.

11. The wet shaving system of claim 8, wherein the wood is selected from substantially rot-resistant wood, rot-proof wood, water-resistant wood, water-proof wood, teakwood, salwood, hollak, beech wood, mahogany, cedar.

12. The wet shaving system of claim 7, wherein the guard bar is in the shape of a longitudinal body with a substantially circular cross-section.

## Patentansprüche

1. Verfahren zur Herstellung eines Nassrasiersystems mit mindestens einer Klinge (4), einer Plattform (1) und einer Schutzleiste (2) mit zwei Enden, die vor der mindestens einen Klinge und parallel zur Klingenschneidkante positioniert ist, wobei das Verfahren die folgenden Schritte umfasst:
- Bereitstellen einer Schutzleiste (2) mit zwei Enden,
- Positionieren der Schutzleiste in einem Formhohlraum für die Plattform,
- Formen mindestens eines Teils der Plattform durch Einspritzen von Kunststoff in den Formhohlraum,
wobei die Enden der Schutzleiste mit dem mindestens einen Teil (3) der Plattform umspritzt werden.

2. Verfahren nach Anspruch 1, wobei die Schutzleiste aus einem Material hergestellt ist, das aus der aus Metall und Holz bestehenden Gruppe ausgewählt ist.

3. Verfahren nach Anspruch 2, wobei das Metall aus der aus Stahl, rostfreiem Stahl, Aluminium, Kupfer, Nickel, Metalllegierungen bestehenden Gruppe ausgewählt ist.

4. Verfahren nach Anspruch 3, wobei das Metall rostfreier Stahl ist.

5. Verfahren nach Anspruch 2, wobei das Holz aus im Wesentlichen fäulnisfestem Holz, fäulnissicherem Holz, wasserbeständigem Holz, wasserdichtem Holz, Teak, Salbaumholz, Hollock, Buche, Mahagoni und Zeder ausgewählt ist.

6. Verfahren nach Anspruch 1, wobei die Schutzleiste die Form eines länglichen Körpers mit einem im Wesentlichen kreisförmigen Querschnitt hat.

7. Nassrasiersystem mit mindestens einer Klinge (4), einer Plattform (1) und einer Schutzleiste (2) mit zwei Enden, die vor der mindestens einen Klinge und parallel zur Klingenschneidkante positioniert ist, **dadurch gekennzeichnet, dass** die Plattform Teile (3) hat, mit denen die Enden der Schutzleiste umspritzt sind.

8. Nassrasiersystem nach Anspruch 7, wobei die Schutzleiste aus einem Material hergestellt ist, das aus der aus Metall und Holz bestehenden Gruppe ausgewählt ist.

9. Nassrasiersystem nach Anspruch 8, wobei das Metall aus der aus Stahl, rostfreiem Stahl, Aluminium, Kupfer, Nickel, Metalllegierungen bestehenden Gruppe ausgewählt ist.

10. Nassrasiersystem nach Anspruch 9, wobei das Metall rostfreier Stahl ist.

11. Nassrasiersystem nach Anspruch 8, wobei das Holz aus im Wesentlichen fäulnisfestem Holz, fäulnissicherem Holz, wasserbeständigem Holz, wasserdichtem Holz, Teak, Salbaumholz, Hollock, Buche, Mahagoni und Zeder ausgewählt ist.

12. Nassrasiersystem nach Anspruch 7, wobei die Schutzleiste die Form eines länglichen Körpers mit einem im Wesentlichen kreisförmigen Querschnitt hat.

## Revendications

1. Procédé de fabrication d'un système de rasage à l'eau comprenant au moins une lame (4), une plate-forme (1) et une barre de protection (2) ayant deux extrémités et positionnée à l'avant de ladite au moins une lame et parallèle au tranchant de la lame, ledit procédé comprenant les étapes consistant à :
- fournir une barre de protection (2) ayant deux extrémités,
- positionner ladite barre de protection dans une cavité de moule pour ladite plate-forme,
- mouler au moins une partie de la plate-forme en injectant une matière plastique dans la cavité de moule,
dans lequel ladite au moins une partie de la plate-forme (3) est moulée sur lesdites extrémités de ladite barre de protection.

2. Procédé selon la revendication 1, dans lequel la barre de protection est constituée d'un matériau choisi dans le groupe composé de métal et de bois.

3. Procédé selon la revendication 2, dans lequel le métal est choisi dans le groupe composé d'acier, d'acier inoxydable, d'aluminium, de cuivre, de nickel, d'alliages métalliques.

4. Procédé selon la revendication 3, dans lequel le métal est de l'acier inoxydable.

5. Procédé selon la revendication 2, dans lequel le bois est choisi parmi un bois résistant sensiblement à la pourriture, un bois imputrescible, un bois résistant à l'humidité, un bois étanche à l'eau, du teck, du sal, de l'hollak, de l'hêtre, de l'acajou, du cèdre.

6. Procédé selon la revendication 1, dans lequel la barre de protection a la forme d'un corps longitudinal ayant une section transversale sensiblement circulaire.

7. Système de rasage à l'eau comprenant au moins une lame (4), une plate-forme (1) et une barre de protection (2) ayant deux extrémités et positionnée à l'avant de ladite au moins une lame et parallèle au tranchant de la lame, **caractérisé en ce que** ladite plate-forme comprend des parties (3) moulées sur lesdites extrémités de ladite barre de protection.

8. Système de rasage à l'eau selon la revendication 7, dans lequel la barre de protection est constituée d'un matériau choisi dans le groupe composé de métal et de bois.

9. Système de rasage à l'eau selon la revendication 8, dans lequel le métal est choisi dans le groupe composé d'acier, d'acier inoxydable, d'aluminium, de cuivre, de nickel, d'alliages métalliques.

10. Système de rasage à l'eau selon la revendication 9, dans lequel le métal est de l'acier inoxydable.

11. Système de rasage à l'eau selon la revendication 8, dans lequel le bois est choisi parmi un bois résistant sensiblement à la pourriture, un bois imputrescible, un bois résistant à l'humidité, un bois étanche à l'eau, du teck, du sal, de l'hollak, de l'hêtre, de l'acajou, du cèdre.

12. Système de rasage à l'eau selon la revendication 7, dans lequel la barre de protection a la forme d'un corps longitudinal ayant une section transversale sensiblement circulaire.
